# EUROPEAN PATENT APPLICATION

(11) **EP 4 075 430 A2**
(43) Date of publication of application: **19.10.2022**
(21) Application number: 22177052.2
(22) Date of filing: 02.06.2022
(51) Int. Cl.: G10L 21/007, G10L 21/013

(54) **METHOD AND APPARATUS FOR SPEECH GENERATION**

(30) Priority: 22.06.2021 CN 202110691955
(71) Applicant: BEIJING BAIDU NETCOM SCIENCE TECHNOLOGY CO., LTD., Beijing 100085 (CN)
(72) Inventor: KANG, Yongguo, Beijing, 100085 (CN); WANG, Junchao, Beijing, 100085 (CN)
(74) Representative: advotec.

(57) **Abstract**

A method for speech generation includes: acquiring speech information of an original speaker; performing text feature extraction on the speech information to obtain a text feature corresponding to the speech information; converting the text feature to an acoustic feature corresponding to a target speaker; and generating a target speech signal based on the acoustic feature.

## Description

### TECHNICAL FIELD

The present disclosure relates to a field of computer technologies, especially to a field of artificial intelligence (AI) technologies such as deep learning (DL) and speech technology, and particularly to a method and an apparatus for speech generation, an electronic device and a storage medium.

### BACKGROUND

With deep fusion of artificial intelligence and media industries and customer service industries, more and more virtual digital persons appear in media and customer service posts. At present, a virtual digital person is driven by speech, that is, a virtual digital person is driven by speech to perform a lip action, change of a facial expression and respective limb actions.

However, in the related art, a virtual digital person is generally directly driven by an original speech of a speaker. For example, in a customer service scene, a virtual digital person is directly driven by a speech of a real-person customer service staff. Since the timbre of the speech of the virtual digital person is the same as the timbre of the speech of the real-person customer service staff, the image and the speech of the virtual digital person may be inconsistent.

### SUMMARY

The disclosure provides a method and an apparatus for speech generation, an electronic device and a storage medium.

According to an aspect of the disclosure, a method for speech generation is provided, and includes: acquiring speech information of an original speaker; performing text feature extraction on the speech information to obtain a text feature corresponding to the speech information; converting the text feature to an acoustic feature corresponding to a target speaker; and generating a target speech signal based on the acoustic feature.

According to another aspect of the disclosure, an apparatus for speech generation is provided, and includes: a first acquiring module, configured to acquire speech information of an original speaker; an extraction module, configured to perform text feature extraction on the speech information to obtain a text feature corresponding to the speech information; a conversion module, configured to convert the text feature to an acoustic feature corresponding to a target speaker; and a generating module, configured to generate a target speech signal based on the acoustic feature.

According to another aspect of the disclosure, an electronic device is provided, and includes: at least one processor; and a memory communicatively coupled to the at least one processor; wherein the memory is stored with instructions executable by the at least one processor, and when the instructions are performed by the at least one processor, the at least one processor is enabled to perform the method for speech generation described above.

According to another aspect of the disclosure, a non-transitory computer readable storage medium stored with computer instructions is provided. The computer instructions are configured to enable a computer to perform the method for speech generation described above.

According to another aspect of the disclosure, a computer program product including a computer program is provided. The computer program is configured to implement the method for speech generation described above when performed by a processor.

With the disclosure, the speech information of the original speaker can be converted to the target speech signal with the corresponding timbre consistent with that of the target speaker, thereby avoiding the situation that the image and the speech of the virtual digital person are inconsistent when the virtual digital person is driven by a target speech signal.

It should be understood that, the content described in this part is not intended to identify key or important features of embodiments of the disclosure, nor intended to limit the scope of the disclosure. Other features of the disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart of a method for speech generation according to a first embodiment of the disclosure;
FIG. 2 is a flowchart of a method for speech generation according to a second embodiment of the disclosure;
FIG. 3 is another flowchart of a method for speech generation according to a second embodiment of the disclosure;
FIG. 4 is a flowchart of a method for speech generation according to a third embodiment of the disclosure;
FIG. 5 is a block diagram of an apparatus for speech generation according to a fourth embodiment of the disclosure;
FIG. 6 is a block diagram of an apparatus for speech generation according to a fifth embodiment of the disclosure;
FIG. 7 is a block diagram of an electronic device configured to achieve a method for speech generation in embodiments of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descri pti ons.

It should be noted that, acquisition, storage and application of user personal information involved in the technical solution of the disclosure comply with relevant laws and regulations, and do not violate public order and good customs.

It can be understood that, in the related art, a virtual digital person is generally directly driven by an original speech of a speaker. For example, in a customer service scene, a virtual digital person is directly driven by a speech of a real-person customer service staff. Since the timbre of the speech of the virtual digital person is the same as the timbre of the speech of the real-person customer service staff, the image and the speech of the virtual digital person may be inconsistent. For example, assume that the virtual digital person is a female image, when the virtual digital person is driven by the speech of a male speaker, the speech of the virtual digital person is male speech, which is inconsistent with the image of the virtual digital person.

With respect to the above problem, the disclosure provides a method for speech generation. In the method, after speech information of an original speaker is acquired, text feature extraction is performed on the speech information to obtain a text feature corresponding to the speech information, and the text feature is converted to an acoustic feature corresponding to a target speaker, and further a target speech signal is generated based on the acoustic feature. Thus, the speech information of the original speaker may be converted to a target speech signal with the corresponding timbre consistent with that of the target speaker, thereby avoiding the situation that the image and the speech of a virtual digital person are inconsistent when the virtual digital person is driven by the target speech signal.

A method and an apparatus for speech generation, an electronic device and a storage medium in embodiments of the disclosure are described below in combination with attached drawings.

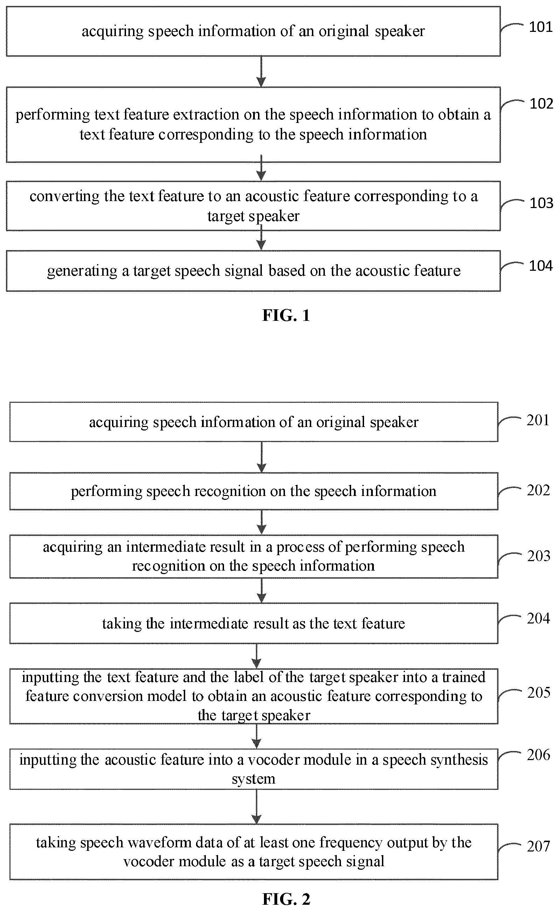

In combination with FIG. 1, the method for speech generation provided in the disclosure is described.

FIG. 1 is a flowchart of a method for speech generation according to a first embodiment of the disclosure. It should be noted that, the executive body of the method for speech generation in embodiments of the disclosure is an apparatus for speech generation. The apparatus for speech generation may be an electronic device, and also may be configured in an electronic device, so that speech information of an original speaker can be converted to a target speech signal with the corresponding timbre consistent with that of the target speaker. Embodiments of the disclosure is described by taking an apparatus for speech generation being configured in an electronic device as an example.

The electronic device may be any stationary or mobile computing device capable of performing data processing, such as a mobile computing device such as a notebook computer, a smartphone, a wearable device, or a stationary computing device such as a desktop computer, or a server, or other types of computing devices, which is not limited in the disclosure.

As illustrated in FIG. 1, the method for speech generation may include the following blocks.

At block 101, speech information of an original speaker is acquired.

The original speaker may be any speaker.

It should be noted that, the apparatus for speech generation in embodiments of the disclosure may acquire speech information of an original speaker through various public legal and compliant methods. For example, the apparatus for speech generation may collect speech information of the original speaker while speaking after licensed by the original speaker, or may acquire record information of the original speaker from other apparatus after licensed by the original speaker, or acquire speech information of the original speaker in other legal and compliant methods, which is not limited in the disclosure.

Taking a virtual digital person being driven by the speech of a real-person customer service staff in a customer service scene for an example, the real-person customer service staff is an original speaker, and after licensed by the real-person customer service staff, the apparatus for speech generation may collect the speech of the real-person customer service staff in real time while the real-person customer service staff is speaking, thereby acquiring speech information of the original speaker.

At block 102, text feature extraction is performed on the speech information to obtain a text feature corresponding to the speech information.

The text feature is a feature relevant with a text in the speech information, and the text feature can represent speech text contents of the speech information.

In an exemplary embodiment, the text feature may be a phonetic posteriorgrams (PPG). The physical definition of the PPG is a probability distribution of a linguistic unit to which each acoustic fragment belongs. Or, the text feature may be other features such as a factor sequence, which is not limited in the disclosure.

In an exemplary embodiment, a feature conversion model may be trained in advance. The input of the feature conversion model is speech information of the text feature to be extracted, and the output is the text feature in the inputted speech information, so that the text feature corresponding to the speech information may be obtained by inputting the speech information of the original speaker into the trained feature extraction model. The feature extraction model may be any type of model that may extract the text feature, for example, a neutral network model, which is not limited in the disclosure.

At block 103, the text feature is converted to an acoustic feature corresponding to a target speaker.

In an exemplary embodiment, a feature conversion model may be pretrained, so that the text feature is converted to an acoustic feature corresponding to a target speaker using a feature conversion model.

The acoustic feature is a physical quantity that represents acoustic properties of speech. The acoustic feature corresponding to a target speaker is an acoustic feature when the speech information of the original speaker corresponds to a target speaker, representing a speech acoustic feature when the speech information of the original speaker corresponds to a target speaker.

In an exemplary embodiment, the acoustic feature may be a spectral envelope feature with a mel scale, or, may be other feature such as a fundamental frequency, which is not limited in the disclosure.

The target speaker is a preset specific speaker. For example, the target speaker may be a speaker with the corresponding speech consistent with the image of the virtual digital person.

For example, taking a virtual digital person being driven by the speech of a real-person customer service staff in a customer service scene for an example, assume that the image of the virtual digital person is consistent with the speech of a speaker A, when the virtual digital person is driven by the speech of a real-person customer service staff B (that is, an original speaker), the speech information of the real-person customer service staff B is converted to a speech signal with the corresponding timbre consistent with that of speaker A, in this case, the speaker A is the target speaker. In embodiments of the disclosure, the text feature extracted from the speech information of the original speaker B may be converted to the acoustic feature corresponding to the target speaker A, the acoustic feature representing a speech acoustic feature when the speech information of the original speaker B corresponds to the target speaker A.

It should be noted that, the image of the virtual digital person in embodiments of the disclosure is not an image for a certain specific user, and may not reflect personal information of a certain specific user.

At block 104, a target speech signal is generated based on the acoustic feature.

In an exemplary embodiment, after the acoustic feature corresponding to the target speaker is obtained, the target speech signal may be generated based on the acoustic feature, in which the timbre corresponding to the target speech signal is consistent with that of the target speaker, so that the speech information of the original speaker is converted to the target speech signal with the corresponding timbre consistent with that of the target speaker.

It can be understood that, the target speech signal generated in embodiments of the disclosure may be configured to drive a virtual digital person. Since the target speaker may be configured as a speaker with the speech consistent with the image of the virtual digital person, and the speech information of the original speaker may be converted to the target speech signal with the corresponding timbre consistent with that of the target speaker, therefore, no matter which speaker the original speaker is, the method for speech generation provided in embodiments of the disclosure can be used, to convert speech information of the original speaker to the target speech signal with the timbre consistent with the image of the virtual digital person, thereby avoiding the situation that the image and the speech of the virtual digital person are inconsistent when the virtual digital person is driven by the target speech signal.

For example, taking a virtual digital person being driven by the speech of a real-person customer service staff in a customer service scene for an example, assume that the image of the virtual digital person is consistent with the speech of a speaker A, and the speaker A is set as the target speaker, since the speech information of the original speaker may be converted to the target speech signal with the corresponding timbre consistent with that of the target speaker based on the method for speech generation provided in the embodiment of the disclosure, in this case, no matter the original speaker is a speaker B or C or any other speaker, the target speech signal consistent with the timbre of the speaker A can be obtained, and further when the virtual digital person is driven by the target speech signal, it can be ensured that the speech of the virtual digital person is consistent with the image of the virtual digital person.

It should be noted that, in the method for speech generation provided in embodiments of the disclosure, since the text feature extracted from the speech information of the original speaker is directly converted to the acoustic feature corresponding to the target speaker, and further the target speech signal is generated based on the acoustic feature, the target speech signal retains features such as emotion and tone of the original speaker, so that in embodiments of the disclosure, when the virtual digital person is driven by the target speech signal generated, the speech of the virtual digital person may contain real person features such as emotion, tone, etc. of the original speaker, thereby bringing a user with a warm interactive experience, and improving interestingness and freshness of the virtual digital person.

In the method for speech generation provided in embodiments of the disclosure, after speech information of the original speaker is acquired, text feature extraction is performed on the speech information to obtain the text feature corresponding to the speech information, and the text feature is converted to the acoustic feature corresponding to the target speaker, and further the target speech signal is generated based on the acoustic feature. Thus, the speech information of the original speaker can be converted to the target speech signal with the corresponding timbre consistent with that of the target speaker, thereby avoiding the situation that the image and the speech of the virtual digital person are inconsistent when the virtual digital person is driven by a target speech signal.

Based on the above analysis, it can be seen that, in embodiments of the disclosure, a trained feature conversion model may be used to convert the text feature to the acoustic feature corresponding to the target speaker. In combination with FIG. 2, in the method for speech generation provided in the disclosure, the process of converting the text feature to the acoustic feature corresponding to the target speaker is further illustrated.

FIG. 2 is a flowchart of a method for speech generation according to a second embodiment of the disclosure. As illustrated in FIG. 2, the method for speech generation may include the following blocks.

At block 201, speech information of an original speaker is acquired.

For the detailed implementation process and principle of block 201, reference may be made to descriptions of the above embodiment, which is not repeated here.

At block 202, speech recognition is performed on the speech information.

At block 203, an intermediate result in a process of performing speech recognition on the speech information is acquired.

At block 204, the intermediate result is taken as the text feature.

It can be understood that, in the process of performing speech recognition on speech information, the text feature in the speech information may be extracted, and further the text feature as the intermediate result may be further processed, to achieve speech recognition of the speech information.

Therefore, in the embodiment of the disclosure, the method for speech recognition in the related art may be used. For example, a speech recognition model in the field of speech technology is directly used to perform speech recognition on the speech information, and acquire an intermediate result in the process of performing speech recognition on the speech information, and take the intermediate result as the text feature, so as to acquire the text feature in the speech information.

Since the method for speech recognition in the related art may be directly used to perform speech recognition on speech information, and the intermediate result in the process of speech recognition on the speech information is taken as the text feature corresponding to the speech information, there is no need to train a feature extraction model to extract the text feature, thereby reducing the cost of acquiring the text feature corresponding to the speech information.

At block 205, the text feature and a label of a target speaker are input into a trained feature conversion model to obtain an acoustic feature corresponding to the target speaker.

The acoustic feature corresponding to the target speaker is an acoustic feature when the speech information of the original speaker corresponds to the target speaker.

The label of the target speaker is configured to uniquely label the target speaker, and may be set based on demands.

In an exemplary embodiment, the feature conversion model may be trained in advance. The input of the feature conversion model is a label of a certain speaker and a text feature extracted from certain speech information, and the output is an acoustic feature when the speech information corresponds to the speaker, so that when the text feature corresponding to speech information of the original speaker and the label of the target speaker are obtained, the text feature and the label of the target speaker may be input into the trained feature conversion model to obtain the acoustic feature when the speech information of the original speaker corresponds to the target speaker.

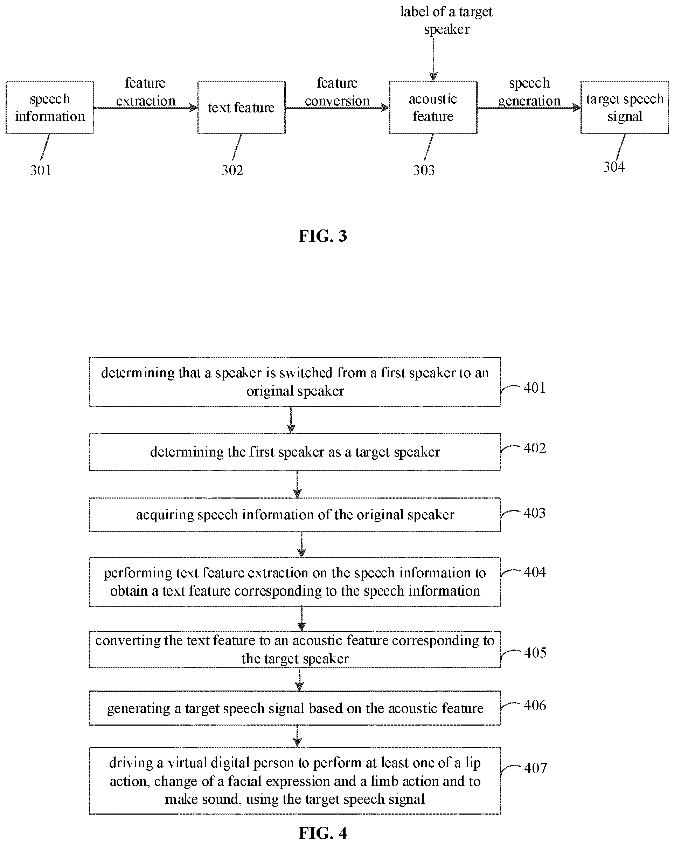

As illustrated in FIG. 3, when speech information 301 of the original speaker is acquired, text feature extraction may be performed on speech information to obtain a text feature 302 corresponding to the speech information 301, and based on the text feature 302 and the label of the target speaker, an acoustic feature 303 corresponding to the target speaker may be obtained by feature conversion.

The text feature and the label of the target speaker are input into the trained feature conversion model to obtain the acoustic feature corresponding to the target speaker, which accurately acquires the acoustic feature when the speech information of the original speaker corresponds to the target speaker.

Correspondingly, before block 205, the feature conversion model may be trained by followings.

Training data is acquired. The training data includes labels of a plurality of sample speakers, and sample text features extracted from sample speech information corresponding to respective sample speakers, and the training data is labeled with sample acoustic features of the sample speech information.

An initial feature conversion model is acquired.

The label of the sample speaker and the sample text feature extracted from the sample speech information corresponding to the sample speaker are inputted into the initial feature conversion model, to obtain a predicted acoustic feature of the sample speech information corresponding to the sample speaker.

Model parameters of the initial feature conversion model are adjusted based on a difference between the predicted acoustic feature of the sample speech information corresponding to the sample speaker and the sample acoustic feature of the sample speech information, to obtain the trained feature conversion model.

When the sample acoustic feature of the sample speech information is used to label the training data, the sample acoustic feature of the sample speech information is a sample acoustic feature when the sample speech information corresponds to the sample speaker, the sample speaker being corresponding to the sample speech information.

For example, for a sample speaker a, the training data may include the label of the sample speaker a and a sample text feature extracted from sample speech information b corresponding to the sample speaker a, and the label of the sample speaker a and the sample text feature extracted from sample speech information b corresponding to the sample speaker a are labeled with the sample acoustic feature when the sample speech information b corresponds to the speaker a.

The initial feature conversion model may be any type of model capable of achieving conversion from the text feature to the acoustic feature, such as a deep neural network model, and the structure and type of the initial feature conversion model are not limited in the present disclosure.

It should be noted that, in the embodiment of the disclosure, the sample speech information corresponding to each sample speaker may be acquired by the apparatus for speech generation in various public, legal and compliant manners, for example, may be acquired from a set of public data or acquired from the sample speaker when licensed by the sample speaker.

In an exemplary embodiment, when the initial feature conversion model is trained, for example, training may be performed by deep learning, and compared with other machine learning methods, the performance of deep learning on a big data set is better.

When the initial feature conversion model is trained by deep learning, the labels of one or more sample speakers in the training data and the sample text feature extracted from the sample speech information corresponding to the sample speaker may be inputted into the initial feature conversion model to acquire the predicted acoustic feature of the sample speech information corresponding to the sample speaker, and a difference between the predicted acoustic feature of the sample speech information corresponding to the sample speaker and the sample acoustic feature of the sample speech information corresponding to the sample speaker is acquired, to adjust the parameters of the initial feature conversion model based on the difference to obtain an adjusted feature conversion model. Then, the labels of another one or more sample speakers in the training data and the sample text feature extracted from the sample speech information corresponding to the sample speaker may be inputted into the adjusted feature conversion model to acquire the predicted acoustic feature of the sample speech information corresponding to the sample speaker, and in combination with the sample acoustic feature of the sample speech information of the sample speaker, a difference between the predicted acoustic feature of the sample speech information corresponding to the sample speaker and the sample acoustic feature of the sample speech information corresponding to the sample speaker is acquired, to adjust the model parameters of the adjusted feature conversion model based on the difference, to obtain a further adjusted feature conversion model. Therefore, the initial feature conversion model is iteratively trained by continuously adjusting the parameters of the initial feature conversion model until the accuracy of the predicted acoustic feature outputted by the feature conversion model meets a preset threshold, to obtain the trained feature conversion model.

Further, when the trained feature conversion model is obtained, the trained feature conversion model can be used to convert the text feature extracted from the speech information of the original speaker to the acoustic feature corresponding to the target speaker.

It should be noted that, in order to make the feature conversion model can learn an association relationship between the text feature and the acoustic feature as well as the label of the target speaker, and further for speech information of any speaker, the feature conversion model can be used to convert the text feature corresponding to the speech information to the acoustic feature corresponding to the target speaker, when the feature conversion model is trained, the training data needs to contain the label corresponding to the target speaker, the sample text feature extracted from the sample speech information corresponding to the target speaker, and the sample acoustic feature of the sample speech information labeling the label corresponding to the target speaker and the sample text feature extracted from the sample speech information corresponding to the target speaker.

That is, the label corresponding to the target speaker is a label corresponding to any sample speaker in the training data.

It should be noted that, based on the above embodiment, in a process of generating the feature conversion model using training data, the label of the sample speaker, the sample text feature extracted from the sample speech information corresponding to the sample speaker and the sample acoustic feature of the sample speech information in the training data correspond to the same sample speaker. When the trained feature conversion model is used to convert the text feature to the acoustic feature, the label of the target speaker and the acoustic feature corresponding to the target speaker correspond to the target speaker, and the text feature corresponds to any speaker.

At block 206, the acoustic feature is inputted into a vocoder module in a speech synthesis system.

At block 207, speech waveform data of at least one frequency outputted by the vocoder module is taken as the target speech signal.

The speech synthesis system may be a system configured to perform speech synthesis in the related art.

It can be understood that, the speech synthesis system generally includes a vocoder module. The input of the vocoder module is the acoustic feature of the speech signal, for example, the spectrum envelope feature with a mel scale, and the output is speech waveform data of at least one frequency of the speech signal. In the embodiment of the disclosure, the vocoder module in the speech synthesis system may be used to generate the target speech signal based on the acoustic feature corresponding to the target speaker.

Specifically, the acoustic feature corresponding to the target speaker may be inputted into the vocoder module in the speech synthesis system, and the speech waveform data of at least one frequency outputted by the vocoder module may be taken as the target speech signal.

Based on the acoustic feature corresponding to the target speaker, the vocoder module in the speech synthesis system may be used to generate the target speech signal, which reduces the cost of generating the target speech signal.

As illustrated in FIG. 3, after the acoustic feature 303 corresponding to the target speaker is generated, a target speech signal 304 may be generated based on the acoustic feature 303.

In the method for speech generation provided in the embodiment of the disclosure, after speech information of the original speaker is acquired, speech recognition is performed on the speech information to acquire the intermediate result in the process of performing speech recognition on the speech information, and the intermediate result is taken as the text feature, and the text feature and the label of the target speaker are inputted into the trained feature conversion model to obtain the acoustic feature corresponding to the target speaker, and further the acoustic feature is inputted into the vocoder module in the speech synthesis system, and the speech waveform data of at least one frequency outputted by the vocoder module is taken as the target speech signal, so that the speech information of the original speaker can be converted to the target speech signal with the corresponding timbre consistent with that of the target speaker, thereby avoiding the situation that the image and the speech of the virtual digital person are inconsistent when the virtual digital person is driven by the target speech signal.

Based on the above analysis, the target speech signal generated in the embodiment of the disclosure may be used to drive the virtual digital person, and in combination with the scene of driving the virtual digital person, the method for speech generation provided in the disclosure is further described below.

FIG. 4 is a flowchart of a method for speech generation according to a third embodiment of the disclosure. As illustrated in FIG. 4, the method for speech generation may include the following blocks.

At block 401, it is determined that a speaker is switched from a first speaker to an original speaker.

At block 402, the first speaker is determined as a target speaker.

It should be noted that, block 402 may be executed before block 403, and may be executed after block 403. The execution time of block 402 is not limited in the disclosure, and only needs to be executed before block 405.

At block 403, speech information of the original speaker is acquired.

At block 404, text feature extraction is performed on the speech information to obtain a text feature corresponding to the speech information.

At block 405, the text feature is converted to an acoustic feature corresponding to the target speaker.

At block 406, a target speech signal is generated based on the acoustic feature.

At block 407, a virtual digital person is driven to perform at least one of a lip action, change of a facial expression and a limb action and to make sound, using the target speech signal.

It can be understood that, the virtual digital person in the media and customer service industries needs a natural and smooth language in the working process, so as to flexibly respond to questions proposed by a user and try to be exactly the same with a real-person customer service staff in language expression. In an actual application scene, a simple question proposed by a user is usually answered by an artificial intelligence customer service, and for a relatively difficult question proposed by a user, it needs to be answered by a real-person customer service staff, thereby, a phenomenon that a virtual digital person needs to be switched between driven by the speech of the artificial intelligence customer service and driven by the speech of the real-person customer service staff. Meanwhile, the virtual digital person needs to support seamless switching between the artificial intelligence customer service and the real-person customer service staff or seamless connection before the real-person customer service staff is on duty, so that the timbre of the speech of the virtual digital person is always kept consistent before and after switching, which brings a warm interaction experience to the user, improves the interestingness and the freshness of the virtual digital person, and enhances the influence of the intelligent media and the intelligent customer service in a young group.

Taking the speaker corresponding to the speech driving the virtual digital person being switched from an artificial intelligence customer service to a real-person customer service staff for an example, that is, the first speaker is the artificial intelligence customer service, and the original speaker is the real-person customer service staff, in the embodiment of the disclosure, the artificial intelligence customer service may be determined as the target speaker, so that when speech information of the original speaker is acquired, text feature extraction may be performed on the speech information to obtain the text feature corresponding to the speech information, and the text feature may be converted to the acoustic feature corresponding to the target speaker, and the target speech signal may be generated based on the acoustic feature, to convert the speech signal of the real-person customer service staff to the target speech signal consistent with the timbre of the artificial intelligence customer service, and further when the virtual digital person is driven by the target speech signal, the timbre of the speech of the virtual digital person may be consistent with the timbre of the speech of the artificial intelligence digital person, so that when the virtual digital person is switched from driven by the speech of the artificial intelligence customer service to taken over by the real-person customer service staff, the timbre of the speech is kept always consistent.

In an exemplary embodiment, when the virtual digital person is driven by the target speech signal, the target speech signal may be used to drive the virtual digital person to perform at least one of a lip action, change of a facial expression and a limb action and to make sound, so that the lip action, the facial expression and the limb action of the virtual digital person are consistent with the speech driving the virtual digital person.

For the detailed implementation process and principle of blocks 403 to 406, reference may be made to descriptions of the above embodiments, which is not repeated here.

In the method for speech generation in the embodiment of the disclosure, when it is determined that the speaker is switched from the first speaker to the original speaker, the first speaker may be determined as the target speaker, and after speech information of the original speaker is acquired, text feature extraction may be performed on the speech information to obtain the text feature corresponding to the speech information, and the text feature may be converted to the acoustic feature corresponding to the target speaker, and the target speech signal may be generated based on the acoustic feature, and further the virtual digital person is driven to perform at least one of a lip action, change of a facial expression and a limb action and to make sound using the target speech signal. Therefore, when the speaker corresponding to the speech driving the virtual digital person is switched from the first speaker to the original speaker, speech information of the original speaker may be converted to the target speech signal with the corresponding timbre consistent with that of the first speaker, so that when the virtual digital person is driven by the target speech signal, the timbre of the speech of the virtual digital person is kept consistent with the timbre of the speech driven by the speech of the first speaker.

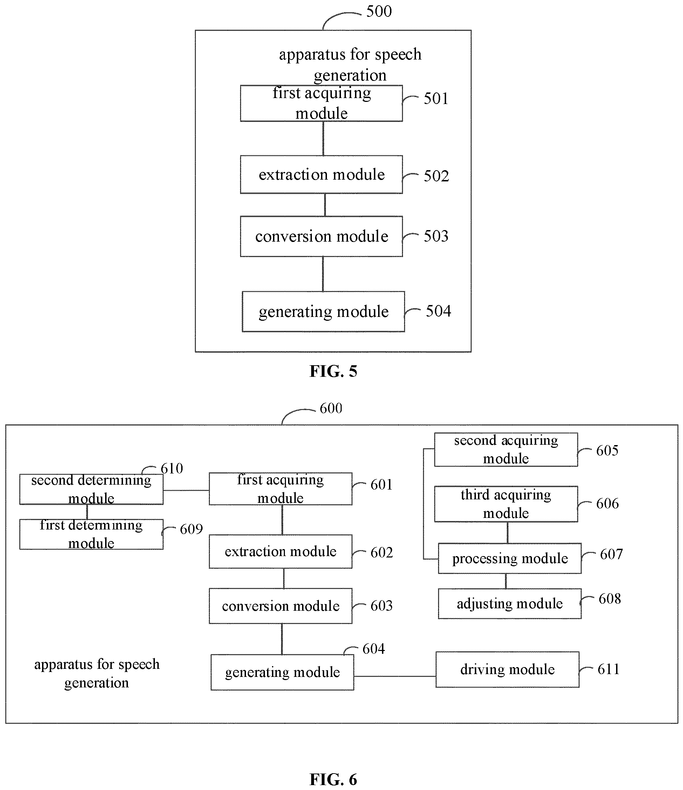

In combination with FIG. 5, the apparatus for speech generation provided in the disclosure is described.

FIG. 5 is a block diagram of an apparatus for speech generation according to a fourth embodiment of the disclosure.

As illustrated in FIG. 5, the apparatus 500 for speech generation includes a first acquiring module 501, an extraction module 502, a conversion module 503 and a generating module 504.

The first acquiring module 501 is configured to acquire speech information of an original speaker.

The extraction module 502 is configured to perform text feature extraction on the speech information to obtain a text feature corresponding to the speech information.

The conversion module 503 is configured to convert the text feature to an acoustic feature corresponding to a target speaker.

The generating module 504 is configured to generate a target speech signal based on the acoustic feature.

It should be noted that, the apparatus for speech generation in the embodiment of the disclosure may perform the method for speech generation in the above embodiments. The apparatus for speech generation may be an electronic device, and also may be configured in an electronic device, so that speech information of the original speaker may be converted to the target speech signal with the corresponding timbre consistent with that of the target speaker.

The electronic device may be any stationary or mobile computing device capable of performing data processing, such as a mobile computing device such as a notebook computer, a smartphone, a wearable device, or a stationary computing device such as a desktop computer, or a server, or other types of computing devices, which is not limited in the disclosure.

It should be noted that the foregoing explanation of the embodiments of the method for speech generation is also applied to the apparatus for speech generation in the embodiment, which will not be repeated here.

In the apparatus for speech generation provided in the embodiment of the disclosure, after speech information of the original speaker is acquired, text feature extraction is performed on the speech information to obtain the text feature corresponding to the speech information, and the text feature is converted to the acoustic feature corresponding to the target speaker, and further the target speech signal is generated based on the acoustic feature. Thus, the speech information of the original speaker can be converted to the target speech signal with the corresponding timbre consistent with the target speaker, thereby avoiding the situation that the image and the speech of a virtual digital person are inconsistent when the virtual digital person is driven by the target speech signal.

In combination with FIG. 6, the apparatus for speech generation provided in the disclosure is described.

FIG. 6 is a block diagram of an apparatus for speech generation according to a fifth embodiment of the disclosure.

As illustrated in Fig. 6, the apparatus 600 for speech recognition may include a first acquiring module 601, an extraction module 602, a conversion module 603 and a generating module 604. The first acquiring module 601, the extraction module 602, the conversion module 603 and the generating module 604 in FIG. 6 may have the same functions and structures as the first acquiring module 501, the extraction module 502, the conversion module 503 and the generating module 504 in FIG. 5.

In an exemplary embodiment, the conversion module 603 includes a conversion unit.

The conversion unit is configured to input the text feature and the label of the target speaker into a trained feature conversion model to obtain the acoustic feature corresponding to the target speaker.

In an exemplary embodiment, as illustrated in FIG. 6, the apparatus 600 for speech generation further includes a second acquiring module 605, a third acquiring module 606, a processing module 607 and an adjusting module 608.

The second acquiring module 605 is configured to acquire training data. The training data includes labels of a plurality of sample speakers, and sample text features extracted from the sample speech information corresponding to respective sample speakers, and the training data is labeled with the sample acoustic features of the sample speech information.

The third acquiring module 606 is configured to acquire an initial feature conversion model.

The processing module 607 is configured to input the label of the sample speaker and the sample text feature extracted from the sample speech information corresponding to the sample speaker into the initial feature conversion model, to obtain a predicted acoustic feature of the sample speech information corresponding to the sample speaker.

The adjusting module 608 is configured to adjust model parameters of the initial feature conversion model based on a difference between the predicted acoustic feature of the sample speech information corresponding to the sample speaker and the sample acoustic feature of the sample speech information, to obtain the trained feature conversion model.

In an exemplary embodiment, the conversion module 603 includes a conversion unit.

The conversion unit is configured to input the text feature and the label of the target speaker into the trained feature conversion model to obtain the acoustic feature corresponding to the target speaker.

In an exemplary embodiment, the label corresponding to the target speaker is a label corresponding to any sample speaker in the training data.

In an exemplary embodiment, the extraction module 602 includes a recognition unit, an acquiring unit and a first processing unit.

The recognition unit is configured to perform speech recognition on the speech information.

The acquiring unit is configured to acquire an intermediate result in a process of performing speech recognition on the speech information.

The first processing unit is configured to take the intermediate result as the text feature.

In an exemplary embodiment, the generating module 604 includes a second processing unit and a third processing unit.

The second processing unit is configured to input the acoustic feature into a vocoder module in a speech synthesis system.

The third processing unit is configured to take the speech waveform data of at least one frequency outputted by the vocoder module as the target speech signal.

In an exemplary embodiment, the apparatus 600 for speech generation further includes a first determining module 609 and a second determining module 610.

The first determining module 609 is configured to determine that a speaker is switched from a first speaker to the original speaker.

The second determining module 610 is configured to determine the first speaker as the target speaker.

In an exemplary embodiment, the apparatus 600 for speech generation further includes a driving module 611.

The driving module 611 is configured to drive a virtual digital person to perform at least one of a lip action, change of a facial expression and a limb action and to make sound, using the target speech signal.

It should be noted that the foregoing explanation of the embodiment of the method for speech generation is also applied to the apparatus for speech generation in the embodiment, which will not be repeated here.

In the apparatus for speech generation provided in the embodiment of the disclosure, after speech information of the original speaker is acquired, text feature extraction is performed on the speech information to obtain the text feature corresponding to the speech information, and the text feature is converted to the acoustic feature corresponding to the target speaker, and further the target speech signal is generated based on the acoustic feature. Thus, the speech information of the original speaker can be converted to the target speech signal with the corresponding timbre consistent with that of the target speaker, thereby avoiding the situation that the image and the speech of the virtual digital person are inconsistent when the virtual digital person is driven by the target speech signal.

According to embodiments of the disclosure, the disclosure further provides an electronic device, a readable storage medium and a computer program product.

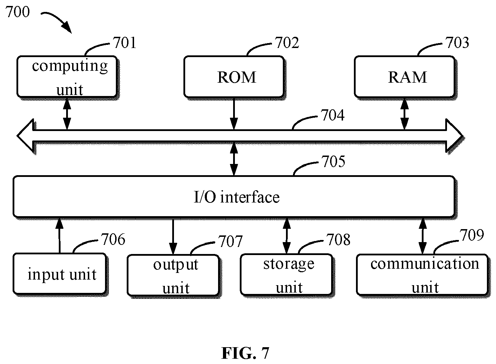

FIG. 7 illustrates a schematic block diagram of an example electronic device 700 configured to execute the embodiment of the disclosure. The electronic device is intended to represent various types of digital computers, such as laptop computers, desktop computers, workstations, personal digital assistants, servers, blade servers, mainframe computers, and other suitable computers. The electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As shown in FIG. 7, the device 700 includes a computing unit 701, configured to execute various appropriate actions and processes according to a computer program stored in a read-only memory (ROM) 702 or loaded from a memory unit 708 to a random access memory (RAM) 703. In the RAM 703, various programs and data required for the device 700 may be stored. The computing unit 701, the ROM 702 and the RAM 703 may be connected with each other by a bus 704. An input/output (I/O) interface 705 is also connected to the bus 704.

A plurality of components in the device 700 are connected to the I/O interface 705, and includes: an input unit 706, for example, a keyboard, a mouse, etc.; an output unit 707, for example various types of displays, speakers; a memory unit 708, for example a magnetic disk, an optical disk; and a communication unit 709, for example, a network card, a modem, a wireless transceiver. The communication unit 709 enables the device 700 to exchange information/data with other devices through a computer network such as internet and/or various types of telecommunication networks.

The computing unit 701 may be various types of general and/or dedicated processing components with processing and computing ability. Some examples of the computing unit 701 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 701 performs various methods and processings as described above, for example, a method for speech generation. For example, in some embodiments, a method for speech generation may be further achieved as a computer software program, which is physically contained in a machine readable medium, such as a storage unit 708. In some embodiments, a part or all of computer programs may be loaded and/or mounted on the device 700 via a ROM 702 and/or a communication unit 709. When the computer program is loaded on a RAM 703 and performed by a computing unit 701, one or more blocks in the above method for speech generation may be performed. Alternatively, in other embodiments, a computing unit 701 may be configured to perform a method for speech generation in other appropriate ways(for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphic user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server further may be a server with a distributed system, or a server in combination with a blockchain.

The present disclosure relates to a field of computer technologies, especially to a field of artificial intelligence (AI) technologies such as deep learning (DL) and speech technology.

It should be noted that, Artificial intelligence(AI) is a subject that studies simulating certain thinking processes and intelligent behaviors (such as learning, reasoning, thinking, planning, etc.) of human beings by a computer, which covers hardware-level technologies and software-level technologies. AI hardware technologies generally include technologies such as sensors, dedicated AI chips, cloud computing, distributed storage, big data processing, etc.; AI software technologies mainly include computer vision technology, speech recognition technology, natural language processing(NLP) technology and machine learning(ML), deep learning(DL), big data processing technology, knowledge graph(KG) technology, etc.

Based on the technical solution provided in the embodiment of the disclosure, after speech information of an original speaker is acquired, text feature extraction is performed on the speech information to obtain a text feature corresponding to the speech information, and the text feature is converted to an acoustic feature corresponding to a target speaker, and further a target speech signal is generated based on the acoustic feature. Thus, the speech information of the original speaker may be converted to a target speech signal with the corresponding timbre consistent with the target speaker, thereby avoiding the situation that the image and the speech of a virtual digital person are inconsistent when the virtual digital person is driven by the target speech signal.

It should be understood that, various forms of procedures shown above may be configured to reorder, add or delete blocks. For example, blocks described in the disclosure may be executed in parallel, sequentially, or in different orders, as long as the desired result of the technical solution disclosed in the present disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the spirit and principle of embodiments of the present disclosure shall be included within the protection scope of the present disclosure.

## Claims

1. A method for speech generation, comprising:
acquiring speech information of an original speaker (101; 201; 403);
performing text feature extraction on the speech information to obtain a text feature corresponding to the speech information (102; 404);
converting the text feature to an acoustic feature corresponding to a target speaker (103; 405); and
generating a target speech signal based on the acoustic feature (104; 406).

2. The method of claim 1, wherein, converting the text feature to the acoustic feature corresponding to a target speaker (103; 405), comprises:
inputting the text feature and a label of the target speaker into a trained feature conversion model to obtain the acoustic feature corresponding to the target speaker (205).

3. The method of claim 2, wherein, before inputting the text feature and the label of the target speaker into the trained feature conversion model (205), further comprising:
acquiring training data, wherein, the training data comprises labels of a plurality of sample speakers, and sample text features extracted from sample speech information corresponding to each of the plurality of sample speakers, and the training data is labeled with sample acoustic features of the sample speech information;
acquiring an initial feature conversion model;
inputting the label of the sample speaker and the sample text feature extracted from the sample speech information corresponding to the sample speaker into the initial feature conversion model, to obtain a predicted acoustic feature of the sample speech information corresponding to the sample speaker; and
adjusting model parameters of the initial feature conversion model based on a difference between the predicted acoustic feature of the sample speech information corresponding to the sample speaker and the sample acoustic feature of the sample speech information, to obtain the trained feature conversion model.

4. The method of claim 3, wherein, the label corresponding to the target speaker is a label corresponding to any sample speaker in the training data.

5. The method of any of claims 1 to 4, wherein, performing text feature extraction on the speech information to obtain the text feature corresponding to the speech information (102; 404), comprises:
performing speech recognition on the speech information (202);
acquiring an intermediate result in a process of performing speech recognition on the speech information (203); and
taking the intermediate result as the text feature (204).

6. The method of any of claims 1 to 5, wherein, generating the target speech signal based on the acoustic feature (104; 406), comprises:
inputting the acoustic feature into a vocoder module in a speech synthesis system (206); and
taking speech waveform data of at least one frequency outputted by the vocoder module as the target speech signal (207).

7. The method of any of claims 1 to 6, wherein, before acquiring speech information of an original speaker (101; 201; 403), further comprising:
determining that a speaker is switched from a first speaker to the original speaker (401); and
determining the first speaker as the target speaker (402).

8. The method of any of claims 1-7, wherein, after generating the target speech signal based on the acoustic feature, further comprising:
driving a virtual digital person to perform at least one of a lip action, change of a facial expression and a limb action and to make sound, using the target speech signal.

9. An electronic device, comprising:
at least one processor; and
a memory communicatively connected to the at least one processor; wherein,
the memory is stored with instructions executable by the at least one processor, and
when the instructions are performed by the at least one processor, the at least one processor is configured to:
acquire speech information of an original speaker;
perform text feature extraction on the speech information to obtain a text feature corresponding to the speech information;
convert the text feature to an acoustic feature corresponding to a target speaker; and
generate a target speech signal based on the acoustic feature.

10. The electronic device of claim 9, wherein, the at least one processor is configured to:
input the text feature and a label of the target speaker into a trained feature conversion model to obtain the acoustic feature corresponding to the target speaker.

11. The electronic device of claim 10, wherein, the at least one processor is further configured to:
acquire training data, wherein, the training data comprises labels of a plurality of sample speakers, and sample text features extracted from the sample speech information corresponding to each of the plurality of sample speakers, and the training data is labeled with the sample acoustic features of the sample speech information;
acquire an initial feature conversion model;
input the label of the sample speaker and the sample text feature extracted from the sample speech information corresponding to the sample speaker into the initial feature conversion model, to obtain a predicted acoustic feature of the sample speech information corresponding to the sample speaker; and
adjust model parameters of the initial feature conversion model based on a difference between the predicted acoustic feature of the sample speech information corresponding to the sample speaker and the sample acoustic feature of the sample speech information, to obtain the trained feature conversion model,
wherein, the label corresponding to the target speaker is a label corresponding to any sample speaker in the training data.

12. The electronic device of any of claims 9 to 11, wherein, the at least one processor is configured to:
perform speech recognition on the speech information;
acquire an intermediate result in a process of performing speech recognition on the speech information; and
take the intermediate result as the text feature.

13. The apparatus of any of claims 9 to 12, wherein, the at least one processor is configured to:
input the acoustic feature into a vocoder module in a speech synthesis system; and
take speech waveform data of at least one frequency outputted by the vocoder module as the target speech signal.

14. The electronic device of any of claims 9 to 13, wherein the at least one processor is further configured to:
determine that a speaker is switched from a first speaker to the original speaker; and
determine the first speaker as the target speaker.

15. The electronic device of any of claims 9 to 14, wherein the at least one processor is further configured to:
drive a virtual digital person to perform at least one of a lip action, change of a facial expression and a limb action and to make sound, using the target speech signal.
